# EUROPÄISCHE PATENTSCHRIFT

(11) **EP 2 311 612 B1**
(45) Veröffentlichungstag und Bekanntmachung des Hinweises auf die Patenterteilung: **22.02.2017**
(21) Anmeldenummer: 10187537.5
(22) Anmeldetag: 14.10.2010
(51) Int. Cl.: B27D 5/00, B23D 45/22

(54) **Vorrichtung zum Bearbeiten von Werkstücken**
Device for machining workpieces
Dispositif destiné au traitement de pièces à usiner

(30) Priorität: 15.10.2009 DE 102009045731
(43) Veröffentlichungstag der Anmeldung: 20.04.2011
(73) Patentinhaber: HOMAG GmbH, 72296 Schopfloch (DE)
(72) Erfinder: Rathgeber, Peter, 72280, Dornstetten (DE)
(74) Vertreter: Hoffmann Eitle

(56) Entgegenhaltungen:
- EP-A1- 2 221 134
- EP-A2- 1 050 388
- DE-A1- 1 703 446
- DE-A1- 2 425 125
- DE-A1- 2 618 594
- DE-A1- 2 831 958
- DE-B- 1 045 207
- GB-A- 1 023 240
- JP-A- S57 138 516
- US-A- 2 833 024
- US-A- 2 836 880

## Beschreibung

### Technisches Gebiet

Die vorliegende Erfindung bezieht sich auf eine Vorrichtung zum Bearbeiten von Werkstücken, die bevorzugt zumindest abschnittsweise aus Holz, Holzwerkstoffen, Kunststoff oder dergleichen bestehen, gemäß dem Oberbegriff des Anspruchs 1. Eine solche Vorrichtung ist aus der US 2 833 024 bekannt.

### Stand der Technik

Die Bearbeitung von Werkstücken werden Werkstücke üblicherweise mittels Fördereinrichtungen den Bearbeitungseinrichtungen zugeführt. Im Bereich der Verarbeitung von plattenförmigen Holz-, Kunststoff-, und Verbundwerkstücken werden die Werkstücke mit einer relativ hohen Geschwindigkeit mittels einer Fördereinrichtung beispielsweise einer Kantenbearbeitungseinrichtung zugeführt.

Im Stand der Technik ist es bekannt, eine Kantenbearbeitung der Werkstücke im Durchlaufverfahren durchzuführen. Hierzu wird ein Bearbeitungsaggregat, z.B. ein Fräsaggregat auf die Materialflussgeschwindigkeit beschleunigt und mit dem Werkstücktransport synchron mitbewegt. Während der synchronen Bewegung wird für die Kantenbearbeitung mittels einer Zusteilachse ein Bearbeitungsmittel in das Werkstück ein - und ausgetaucht. Danach wird das Bearbeitungsaggregat schnell in seine Ausgangsposition zurückgefahren und der Vorgang wird für das nächste Werkstück erneut durchgeführt. Nachteilig hierbei ist, das die Taktleistung begrenzt, die Steuerung aufwändig und diese technische Lösung teuer ist.

Ferner offenbart die DE 101 24 081 C1 eine gattungsgemäße Bearbeitungsvorrichtung mit einer Kappsäge. Diese sitzt auf einem Support, der über einen Getriebemechanismus eine Oszillationsbewegung ausführen kann. Dabei stützt sich der Support über einen Taster an dem zu bearbeitenden Werkstück ab. Allerdings hat sich gezeigt, dass diese Bearbeitungsvorrichtung trotz Konstruktion insbesondere bei hohen Fördergeschwindigkeiten bzw. Taktzahlen keine ausreichend präzisen Bearbeitungsergebnisse liefert.

Ferner offenbart die DE 1 045 207 B Vorrichtung mit einer "fliegenden Säge" zum Schneiden von Walzgut, wobei das Sägeblatt über einen Träger geführt wird. Die Werkzeugbewegung beinhaltet das sensorgesteuerte Anlaufen der Säge und ihre Bewegung entlang eines Kreisbahnsegments, bevorzugt um einen Winkel von 90° und das Zurückfahren in Ausgangsposition durch eine Federkraft.

### Darstellung der Erfindung

Es ist daher Aufgabe der vorliegenden Erfindung eine Vorrichtung und ein Verfahren zum Bearbeiten von Werkstücken, die bevorzugt zumindest abschnittsweise aus Holz, Holzwerkstoffen, Kunststoff oder dergleichen bestehen zur Verfügung zu stellen, die es ermöglicht, Werkstücke im Durchlaufverfahren bei hohen Taktzahlen präzise und kostengünstig zu bearbeiten.

Erfindungsgemäß wird diese Aufgabe durch eine Vorrichtung und ein Verfahren mit den Merkmalen der unabhängigen Patentansprüche gelöst. In den Unteransprüchen finden sich vorteilhafte Ausgestaltungen und Verbesserungen der Erfindung.

Demgemäß umfasst eine erfindungsgemäße Vorrichtung eine Fördereinrichtung zum Fördern der Werkstücke in einer Förderrichtung und eine Bearbeitungseinrichtung zum Be- und/oder Verarbeiten einer ersten und/oder zweiten Werkstückfläche, insbesondere Werkstückschmalfläche, die das Werkstück seitlich in der Förderrichtung begrenzt. Dieser Grundaufbau entspricht soweit dem Stand der Technik einer Maschine zum Transportieren und gleichzeitigen Bearbeiten von Werkstückflächen.

Der vorliegenden Erfindung liegt der Gedanke zu Grunde, die Bearbeitung im laufenden Materialfluss zu ermöglichen, indem die Bearbeitungseinrichtung ein Bearbeitungsmittel aufweist, das an einem Träger angebracht ist, der an einer ersten Lagerungsstelle entlang einer ersten Kurvenbahn und an einer zweiten Lagerungsstelle entlang einer zweiten Kurvenbahn geführt ist. Wird der Träger mit dem Bearbeitungsmittel an zwei Stellen entlang von Kurvenbahnen zum geförderten Werkstück bewegt, wird das Bearbeitungsmittel an jeder dieser Lagerungsstellen entsprechend dem Richtungsvektor der Kurvenbewegung, der in Förderrichtung zeigt, in der Förderrichtung und entsprechend dem Richtungsvektor der Kurvenbewegung, der quer zur Förderrichtung zum Werkstück hin zeigt, in Richtung auf das Werkstück zu bzw. davon weg bewegt. Durch die Bewegungsvektoren der Kurvenbahnen werden somit sowohl die Bewegung des Bearbeitungsmittels mit dem Werkstück und zurück als auch die Zustellbewegung realisiert.

Bevorzugt sind die resultierenden Bewegungsgeschwindigkeiten beider Lagerungsstellen in der Förderrichtung während der Bearbeitung gleich der Bewegungsgeschwindigkeit des Werkstücks in der Förderrichtung. Das Bearbeitungsmittel wird dadurch mit dem Werkstück in der Förderrichtung mitbewegt und taucht gleichzeitig in das Werkstück ein oder wird davon wegbewegt. Nach dem Bearbeiten wird das Bearbeitungsmittel auf seiner Bahn, die durch die Führung der Lagerungsstellen des Trägers entlang der ersten bzw. zweiten Kurvenbahn, definiert ist, in seine Ausgangslage zurückgeführt. Die Kurvenbahn wird somit bevorzugt in einer Richtung durchlaufen, wodurch ein Abstoppen und Reversieren der Bearbeitungsmittelbewegung entfällt. Ferner entfällt die aufwändige, bei herkömmlichen Bearbeitungsmaschinen erforderliche, Synchronisation der Bearbeitungsmittelbewegung entlang des Materialflusses mittels einer ersten linearen Achse und der Zustellbewegung mittels einer weiteren linearen Achse. Auch das dynamische Verhalten der erfindungsgemäßen Lösung ist gegenüber dem Stand der Technik verbessert, da das Abstoppen und Beschleunigen entfällt, wodurch erhöhte Taktleistungen ermöglicht werden.

Erfindungsgemäß weist die Vorrichtung ferner eine Steuereinrichtung auf, die eingerichtet ist, die Bewegung des Trägers entlang der ersten und zweiten Kurvenbahn in Abhängigkeit von der Förderbewegung der Werkstücke entlang der Fördereinrichtung zu steuern. Hierdurch kann auf jegliche direkte Kopplung zwischen dem Träger und dem zu bearbeitenden Werkstück verzichtet werden. Auf diese Weise wird verhindert, dass das Werkstück durch Kontaktkräfte zwischen Träger und Werkstück verrutscht, so dass deutlich größere Fördergeschwindigkeiten möglich sind. Ferner wird die Konstruktion der Maschine entsprechend vereinfacht. Um bei der erfindungsgemäßen Bearbeitungsvorrichtung ein gutes Ansprechverhalten und somit eine präzise Bearbeitung zu erzielen, ist gemäß der Erfindung vorgesehen, die Steuereinrichtung (30) über eine Masterverknüpfung mit der Fördereinrichtung (4) und über eine Slaveverknüpfung mit einer Antriebseinrichtung zur Erzeugung der Bewegung des Trägers (14) entlang der ersten und zweiten Kurvenbahn (K1, K2) verbunden ist.

Gemäß der Erfindung ist die Bewegung des Bearbeitungsmittels mit der translatorischen Bewegung der Fördereinrichtung synchronisiert, und zwar derart, dass die Bearbeitungseinrichtung zumindest während des Bearbeitungsvorganges im wesentlichen dieselbe Bewegungsgeschwindigkeit in der Förderrichtung besitzt wie die Fördereinrichtung. Dadurch wird eine Zustellung des Bearbeitungsmittels orthogonal zur Förderrichtung realisiert. Ist die Fördergeschwindigkeit des Werkstückes konstant, variiert dabei die Zustellgeschwindigkeit des Bearbeitungsmittels. Dabei ist es besonders bevorzugt, dass die Synchronisation frei von mechanischer Kopplung zwischen Werkstück und Bearbeitungsmittel erfolgt. Auf diese Weise wird verhindert, dass das Werkstück durch Kontaktkräfte zwischen Träger und Werkstück verrutscht, so dass deutlich größere Fördergeschwindigkeiten möglich sind. Ferner wird die Konstruktion der Maschine entsprechend vereinfacht.

Gemäß einer bevorzugten Ausführungsform der Erfindung ist die erste Lagerungsstelle an einer ersten Antriebskurbel und die zweite Lagerungsstelle an einer zweiten Antriebskurbel zum Bewegen des Trägers mit dem Bearbeitungsmittel angelenkt. Die Antriebskurbeln führen dabei die Lagerungsstellen unter Aufbringung eines Drehmoments entlang jeweils einer Kurvenbahn.

Gemäß einer bevorzugten Weiterbildung weist die Bearbeitungseinrichtung eine Messeinrichtung zum Erfassen der Förderposition der Werkstücke entlang der Fördereinrichtung auf. Dies ermöglicht eine Berücksichtigung der tatsächlichen Werkstückposition, ggf. auch unabhängig von der Fördereinrichtung. Auch können Verlagerungen des Werkstücks auf der Fördereinrichtung berücksichtigt werden. Ferner können Änderungen der Werkstückgeometrie bei der Bearbeitung berücksichtigt werden, ohne dass in die Steuerung der Fördereinrichtung für eine Synchronisation mit der Bearbeitung eingegriffen werden muss.

Gemäß der Erfindung ist vorgesehen, dass die Fördereinrichtung mindestens ein mitfahrendes Referenzmittel, insbesondere mindestens einen Anschlag, für ein Werkstück aufweist. Dies ermöglicht eines besonders einfache und gleichzeitig robuste Abstimmung des Betriebes der Förder- und Bearbeitungseinrichtung. Gemäß einer bevorzugten Weiterbildung ist die Bearbeitungseinrichtung als spanend bearbeitendes Aggregat, insbesondere als Säge- oder Fräsaggregat ausgebildet. Durch eine Fräs- oder Sägebearbeitung lassen sich gewünschte Geometrien an den Werkstückanten realisieren. Die Bearbeitungseinrichtung kann ferner bevorzugt ein Bearbeitungsmittel zum Ausklinken oder auch ein Bohraggregat aufweisen. Ferner kann die Bearbeitungseinrichtung als Aggregat zum Einbringen von Verbindungselementen oder dergleichen in das Werkstück ausgebildet sein. Beispielsweise werden hierbei Befestigungshülsen, Gewindeelemente usw. in das Werkstück eingepresst oder eingeschraubt.

Besonders bevorzugt sind die Kurvenbahnen Kreisbahnen, bevorzugt Ellipsoidbahnen oder Parabelbahnen. Kreisbahnen bieten den Vorteil, dass diese besonders einfach durch eine Drehlagerung der Kurbeln realisierbar und als rotatorische Achsen einfach steuerbar sind. Ellipsoidbahnen oder Parabelbahnen ermöglichen die Einstellung spezifischer Geschwindigkeitscharakteristiken der Annäherung des Bearbeitungsmittels quer zur Förderrichtung an das Werkstück.

Bevorzugt weisen die erste Kurvenbahn und die zweite Kurvenbahn die gleiche Geometrie auf und sind planparallel zueinander, so dass der Träger eine gleich bleibende Winkelstellung zur Förderrichtung einnimmt.

Besonders bevorzugt ist das Bearbeitungsmittel zwischen der ersten Lagerungsstelle und der zweiten Lagerungsstelle an dem Träger angebracht. Dadurch ergibt sich eine statisch stabile Aufnahme des Bearbeitungsmittels zwischen den beiden Lagerungsstellen. Ebenso möglich ist eine Anordnung des Bearbeitungsmittels außerhalb der Lagerungsstellen am Träger. Das Bearbeitungsmittel kann dadurch in einer Richtung mit mehr Freiraum am Träger angebracht werden. Dadurch ergibt sich auch eine andere Kinematik, der die Steuerung der Kurbeln Rechnung tragen muss.

Bevorzugt sind die Antriebskurbeln ohne Zwischenschaltung des Werkstücks mechanisch oder elektromechanisch mit der Fördereinrichtung gekoppelt. Diese Kopplung der Antriebskurbeln mit der Fördereinrichtung ermöglicht eine einfache Synchronisation zwischen beiden, ohne dass eine Werkstückposition erfasst werden muss. Der steuerungstechnische Aufwand und die Fehleranfälligkeit kann auf diese Weise reduziert werden.

Das erfindungsgemäße Verfahren ist in Anspruch 10 definiert. Bevorzugt kann bei dem Verfahren die Position wenigstens eines auf der Fördereinrichtung geförderten Werkstückes erfasst werden, auf deren Basis das Bewegen der ersten Lagerungsstelle entlang der ersten Kurvenbahn und/oder der zweiten Lagerungsstelle entlang der zweiten Kurvenbahn gesteuert wird. Diese Steuerung der Bewegung des Trägers mit dem Bearbeitungsmittel ermöglicht die Berücksichtigung der tatsächlichen Werkstückposition, ggf. auch unabhängig von der Fördereinrichtung. Es können Verlagerungen des Werkstücks auf der Fördereinrichtung berücksichtigt werden. Ferner können Änderungen der Werkstückgeometrie bei der Bearbeitung berücksichtigt werden, ohne dass in die Steuerung der Fördereinrichtung für eine Synchronisation mit der Bearbeitung eingegriffen werden muss.

### Kurze Beschreibung der Zeichnung

Von den Figuren zeigen:

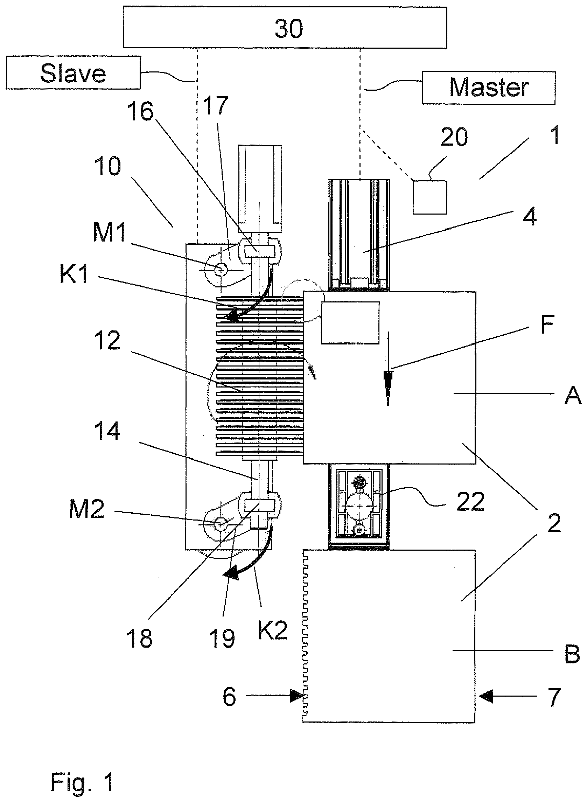

- Fig. 1: eine schematische Draufsicht eines Ausführungsbeispiels einer erfindungsgemäßen Vorrichtung zum Bearbeiten von Werkstücken.

### Ausführliche Beschreibung bevorzugter Ausführungsformen

Die Erfindung wird im Folgenden anhand eines Ausführungsbeispiels unter Bezugnahme auf die beiliegende Zeichnung näher erläutert.

Fig. 1 zeigt eine schematische Draufsicht eines Ausführungsbeispiels einer erfindungsgemäßen Vorrichtung 1 zum Bearbeiten von Werkstücken 2. Bei dem Werkstück handelt es sich in der vorliegenden Ausführungsform um ein plattenförmiges Bauteil aus Holz, Holzwerkstoffen, Kunststoff oder dergleichen, obgleich die Erfindung nicht hierauf beschrankt ist.

Das Werkstück 2 weist eine erste Werkstückfläche 6 und eine zweite Werkstückfläche 7 auf, die in dieser Draufsicht vertikal zur Bildebene von Fig. 1 verlaufen. Das Werkstück 2 ist in Fig. 1 in einer ersten Werkstückposition A und einer zweiten Werkstückposition B dargestellt. Eine Fördereinrichtung 4, die in Fig. 1 von oben nach unten verlaufend dargestellt ist, transportiert das Werkstück 2 zur ersten Werkstückposition A, dann weiter zur zweiten Werkstückposition B und weiter in der Materialflussrichtung F, die mit einem Pfeil dargestellt ist. In der ersten Werkstückposition A ist das Werkstück 2 noch nicht bearbeitet, in der zweiten Werkstückposition B ist die erste Werkstückfläche 6, die im wesentlichen parallel zur Förderrichtung F verläuft, bearbeitet.

Eine Bearbeitungseinrichtung 10 ist links neben dem Werkstück 2 dargestellt. Die Bearbeitungseinrichtung 10 weist als Bearbeitungsmittel 12 bei diesem Ausführungsbeispiel ein Fräsaggregat auf. Das Bearbeitungsmittel 12 ist an einem Träger 14 angebracht. Der Träger 14 ist an einer ersten Lagerungsstelle 16 an einer ersten Antriebskurbel 17 angelenkt und an einer zweiten Lagerungsstelle 18 an einer zweiten Antriebskurbel 19 angelenkt. Die erste Antriebskurbel 17 bewegt die erste Lagerungsstelle 16 des Trägers 14 unter Aufbringung eines Drehmomentes entlang einer ersten Kurvenbahn K1 die bei diesem Ausführungsbeispiel als Kreisbahn um den Mittelpunkt M1 realisiert und durch einen Pfeil dargestellt ist. Die zweite Antriebskurbel 19 bewegt die zweite Lagerungsstelle 18 des Trägers 14 unter Aufbringung eines Drehmoments entlang einer zweiten Kurvenbahn K2, die bei diesem Ausführungsbeispiel als Kreisbahn um den Mittelpunkt M2 realisiert und durch einen Pfeil dargestellt ist.

Die Antriebskurbeln werden in der vorliegenden Ausführungsform mittels einer nicht gezeigten Antriebseinrichtung angetrieben, die über eine Slaveverknüpfung an eine Steuereinrichtung 30 angebunden ist. Die Steuereinrichtung 30 ist wiederum über eine Masterverknüpfung mit einer Messeinrichtung 20, beispielsweise einem Sensor, zum Erfassen der Förderposition der Werkstücke 2 entlang der Fördereinrichtung 4 verbunden.

Erfindungsgemäß ist die Steuereinrichtung 30 über eine Masterverknüpfung mit der Fördereinrichtung 4 selbst verbunden. In Verbindung mit an der Fördereinrichtung vorgesehenen Referenzmitteln (z.B. Anschlägen) 22 für die Werkstücke 2 kann die Steuereinrichtung 30 somit jederzeit feststellen, in welcher Förderposition sich die zu bearbeitenden Werkstücke befinden.

Auf der Grundlage der Förderposition steuert die Steuereinrichtung 30 die Bearbeitungseinrichtung 10. Es besteht somit keine Notwendigkeit einer Tastung zwischen Bearbeitungseinrichtung 10 und Werkstück 2.

Im Betrieb wird das Werkstück 2 an der ersten Werkstückfläche 6 bearbeitet, während es von der Fördereinrichtung 4 in Materialflussrichtung F aus der ersten Werkstückposition A in die zweite Werkstückposition B transportiert wird. Das Bearbeitungsmittel 12 der Bearbeitungseinrichtung 10 wird während des Werkstücktransports in einen Bearbeitungseingriff mit dem Werkstück 2 geschwenkt. Dazu schwenkt die erste angetriebene Antriebskurbel 17 im Uhrzeigersinn um den Mittelpunkt M1. Dabei wird der Träger 14 mit der ersten Lagerungsstelle 16 entlang der ersten Kurvenbahn K1 bewegt.

Entsprechend schwenkt die zweite angetriebene Antriebskurbel 19 im Uhrzeigersinn um den Mittelpunkt M2. Dabei wird der Träger 14 mit der zweiten Lagerungsstelle 18 entlang der zweiten Kurvenbahn K2 bewegt.

Bei diesem Ausführungsbeispiel sind die Geometrien der Kurvenbahnen K1 und K2 gleich und die Bewegung der Antriebskurbeln 17, 19 erfolgt synchron. Dadurch bleibt der Träger 14 mit dem daran angeordneten Bearbeitungsmittel 12 während der Bewegung gleich zu dem Werkstück 2 ausgerichtet. Durch das Führen der Lagerungsstellen 16, 18 entlang der Kurvenbahnen K1, K2 wird das Bearbeitungsmittel 12 gegen das Werkstück 2 geführt, so dass dieses bearbeitet wird.

Bei diesem Ausführungsbeispiel wird die Drehgeschwindigkeit der Antriebskurbeln 17, 19 durch die Steuereinrichtung 30 so gesteuert, dass die Verlagerungsgeschwindigkeit des Bearbeitungsmittels 12 in der Förderrichtung F während des Eingriffs des Bearbeitungsmittels 12 in das Werkstück 2 immer gleich der Fördergeschwindigkeit des Werkstücks 2, also der Transportgeschwindigkeit der Fördereinrichtung 4 ist. Dadurch kann das Bearbeitungsmittel 12 wie bei konventionellen Bearbeitungsmaschinen orthogonal zur Förderrichtung F in das Werkstück 2 einstechen.

Der Vorteil der erfindungsgemäßen Lösung liegt unter anderem darin, dass die Bewegung nach der Bearbeitung eines Werkstücks 2 als Kreisbahnbewegung weiter fortgesetzt werden kann und daher kein Abstoppen nötig ist. Eine 360° Drehung der Antriebskurbeln 17, 19 in eine Drehrichtung führt bei der erfindungsgemäßen Vorrichtung wieder zu einer identischen Lage des Bearbeitungsmittels 12. Dadurch kann mit der erfindungsgemäßen Vorrichtung eine höhere Taktgeschwindigkeit realisiert werden als bei herkömmlichen Bearbeitungsmaschinen. Ferner ist die erfindungsgemäße Vorrichtung gemäß diesem Ausführungsbeispiel mit geringem Aufwand steuerbar, da lediglich eine der gleichlaufenden rotatorischen Achsen steuerungstechnisch berücksichtigt werden muss, die das Bearbeitungsmittel 12 mit dem Materialfluss mitführen und gleichzeitig eine Zustellbewegung realisieren.

Obwohl die vorliegende Erfindung anhand bevorzugter Ausführungsbeispiele vorliegend beschrieben wurde, ist sie darauf nicht beschränkt, sondern auf vielfältige Weise modifizierbar.

### Bezugszeichenliste

- 1: Vorrichtung zum Bearbeiten von Werkstücken
- 2: Werkstück
- 4: Fördereinrichtung
- 6: erste Werkstückfläche
- 7: zweite Werkstückfläche
- 10: Bearbeitungseinrichtung
- 12: Bearbeitungsmittel
- 14: Träger
- 16: erste Lagerungsstelle
- 17: erste Antriebskurbel
- 18: zweite Lagerungsstelle
- 19: zweite Antriebskurbel
- 20: Messeinrichtung
- 22: Anschlag
- 30: Steuereinrichtung
- A: erste Werkstückposition
- B: zweite Werkstückposition
- F: Förderrichtung
- K1: erste Kurvenbahn
- K2: zweite Kurvenbahn
- M1: erster Mittelpunkt
- M2: zweiter Mittelpunkt

## Patentansprüche

1. Vorrichtung (1) zum Bearbeiten von Werkstücken (2), die bevorzugt zumindest abschnittsweise aus Holz, Holzwerkstoffen, Kunststoff oder dergleichen bestehen, umfassend:
eine Fördereinrichtung (4) zum Fördern der Werkstücke (2) in einer Förderrichtung (F);
eine Bearbeitungseinrichtung (10) zum Be- und/oder Verarbeiten einer ersten und/oder zweiten Werkstückfläche (6, 7), insbesondere Werkstückschmalfläche, die das Werkstück (2) seitlich in der Förderrichtung (F) begrenzt, wobei
die Bearbeitungseinrichtung (10) ein Bearbeitungsmittel (12) aufweist, das an einem Träger (14) angebracht ist, der an einer ersten Lagerungsstelle (16) entlang einer ersten Kurvenbahn (K1) und an einer zweiten Lagerungsstelle (18) entlang einer zweiten Kurvenbahn (K2) geführt ist,
wobei die Vorrichtung ferner eine Steuereinrichtung (30) aufweist, die eingerichtet ist, die Bewegung des Trägers (14) entlang der ersten und zweiten Kurvenbahn (K1, K2) in Abhängigkeit von der Förderbewegung der Werkstücke (2) entlang der Fördereinrichtung (4) zu steuern,
wobei die Steuereinrichtung (30) über eine Masterverknüpfung mit der Fördereinrichtung (4) und über eine Slaveverknüpfung mit einer Antriebseinrichtung zur Erzeugung der Bewegung des Trägers (14) entlang der ersten und zweiten Kurvenbahn (K1, K2) verbunden ist
und die Bewegung des Bearbeitungsmittels (12) mit der translatorischen Bewegung der Fördereinrichtung (4) synchronisiert ist, und zwar derart, dass die Bearbeitungseinrichtung (10) zumindest während des Bearbeitungsvorganges im wesentlichen dieselbe Bewegungsgeschwindigkeit in der Förderrichtung (F) besitzt wie die Fördereinrichtung (4),
**dadurch gekennzeichnet,**
**dass** die Fördereinrichtung mindestens ein mitfahrendes Referenzmittel (22), insbesondere mindestens einen Anschlag, für ein Werkstück aufweist.

2. Vorrichtung (1) zum Bearbeiten von Werkstücken (2) nach Anspruch 1,
**dadurch gekennzeichnet,**
**dass** sie eine Messeinrichtung (20) zum Erfassen der Förderposition der Werkstücke (2) entlang der Fördereinrichtung (4) aufweist.

3. Vorrichtung (1) zum Bearbeiten von Werkstücken (2) nach einem der vorhergehenden Ansprüche,
**dadurch gekennzeichnet,**
**dass** die Bewegung des Bearbeitungsmittels (12) mit der translatorischen Bewegung der Fördereinrichtung (4) frei von mechanischer Kopplung zwischen Werkstück (2) und Bearbeitungsmittel (12) synchronisiert ist.

4. Vorrichtung (1) zum Bearbeiten von Werkstücken (2) nach einem der vorhergehenden Ansprüche,
**dadurch gekennzeichnet,**
**dass** die erste Lagerungsstelle (16) an einer ersten Antriebskurbel (17) und die zweite Lagerungsstelle (18) an einer zweiten Antriebskurbel (19) zum Bewegen des Trägers (14) mit dem Bearbeitungsmittel (12) angelenkt sind.

5. Vorrichtung (1) zum Bearbeiten von Werkstücken (2) nach einem der vorhergehenden Ansprüche,
**dadurch gekennzeichnet,**
**dass** die Kurvenbahnen (K1, K2) Kreisbahnen, Ellipsoidbahnen oder Parabelbahnen sind, wobei die erste Kurvenbahn (K1) und die zweite Kurvenbahn (K2) bevorzugt die gleiche Geometrie aufweisen und/oder planparallel zueinander sind.

6. Vorrichtung (1) zum Bearbeiten von Werkstücken (2) nach einem der vorhergehenden Ansprüche,
**dadurch gekennzeichnet,**
**dass** das Bearbeitungsmittel (12) zwischen der ersten Lagerungsstelle (16) und der zweiten Lagerungsstelle (18) an dem Träger (14) angebracht ist.

7. Vorrichtung (1) zum Bearbeiten von Werkstücken (2) nach einem der vorhergehenden Ansprüche,
**dadurch gekennzeichnet,**
**dass** die Antriebskurbeln (17, 19) ohne Zwischenschaltung des Werkstücks (2) mechanisch oder elektromechanisch mit der Fördereinrichtung (4) gekoppelt sind.

8. Verfahren zum Bearbeiten von Werkstücken (2) unter Einsatz einer Vorrichtung (1) nach einem der vorhergehenden Ansprüche, mit den Schritten:
a) Fördern des Werkstückes (2) mittels der Fördereinrichtung (4);
b) Bearbeiten der ersten und/oder zweiten Werkstückfläche (6, 7), die das Werkstück (2) seitlich in der Förderrichtung (F) begrenzen, mittels des Bearbeitungsmittels (12) der Bearbeitungseinrichtung (10) gleichzeitig mit dem Fördern,
wobei die Steuereinrichtung (30) die Vorrichtung (1) derart steuert, dass der Träger (14), an dem das Bearbeitungsmittel (12) angebracht ist, mit seiner ersten Lagerungsstelle (16) entlang der ersten Kurvenbahn (K1) und mit seiner zweiten Lagerungsstelle (18) entlang der zweiten Kurvenbahn (K2) bewegt wird, und wobei die Bearbeitungseinrichtung (10) zumindest während des Bearbeitungsvorganges im wesentlichen dieselbe Bewegungsgeschwindigkeit in der Förderrichtung (F) besitzt wie die Fördereinrichtung (4).

9. Verfahren nach Anspruch 8,
**dadurch gekennzeichnet,**
**dass** vor und/oder während des Verfahrensschritts der Bearbeitung ein Verfahrensschritt c) einer Erfassung der Position wenigstens eines auf der Fördereinrichtung (4) geförderten Werkstückes (2) erfolgt, auf deren Basis das Bewegen der ersten Lagerungsstelle (16) entlang der ersten Kurvenbahn (K1) und/oder der zweiten Lagerungsstelle (18) entlang der zweiten Kurvenbahn (K2) gesteuert wird.

10. Verfahren nach Anspruch 8 oder 9,
**dadurch gekennzeichnet,**
**dass** die räumliche Orientierung des Trägers (14) zur Förderrichtung (F) zumindest während der Bearbeitung im Wesentlichen unverändert bleibt.

11. Verfahren nach einem der Ansprüche 8 bis 10,
**dadurch gekennzeichnet,**
**dass** vor und/oder während des Arbeitsschritts der Bearbeitung die erste Antriebskurbel (17) und die zweite Antriebskurbel (19) mit der Fördereinrichtung (4) derart gekoppelt sind, dass die Lage und/oder Geschwindigkeit der Fördereinrichtung (4) erfasst und zur Steuerung einer Drehlage und/oder Drehgeschwindigkeit der Antriebskurbeln (17, 19) verwendet wird.

## Claims

1. Apparatus (1) for machining workpieces (2) which are preferably in at least one section made of wood, derived timber products, plastic or the like, comprising:
a conveying device (4) for conveying the workpieces (2) in a direction of conveying (F);
a machining device (10) for machining and/or processing a first and/or second workpiece surface (6, 7), in particular a narrow workpiece surface, which defines the workpiece (2) laterally in the direction of conveying (F), wherein
the machining device (10) has a machining means (12) which is mounted on a carrier (14) which is guided along a first curved path (K1) at a first mounting point (16) and along a second curved path (K2) at a second mounting point (18),
wherein the apparatus further has a control device (30) which is designed to control the movement of the carrier (14) along the first and second curved paths (K1, K2) as a function of the movement of conveying the workpieces (2) along the conveying device (4),
wherein the control device (30) is connected by a master link to the conveying device (4) and by a slave link to a drive device for generating the movement of the carrier (14) along the first and second curved paths (K1, K2)
and the movement of the machining means (12) is synchronised with the translational movement of the conveying device (4), this being in such a way that, at least during the machining operation, the machining device (10) has substantially the same speed of movement in the direction of conveying (F) as the conveying device (4), **characterised in that** the conveying device has at least one reference means (22) travelling with it, in particular at least one stop, for a workpiece.

2. Apparatus (1) for machining workpieces (2) according to claim 1, **characterised in that** it has a measuring device (20) for detecting the position of conveying the workpieces (2) along the conveying device (4).

3. Apparatus (1) for machining workpieces (2) according to any of the preceding claims, **characterised in that** the movement of the machining means (12) is synchronised with the translational movement of the conveying device (4), free from mechanical coupling between workpiece (2) and machining means (12).

4. Apparatus (1) for machining workpieces (2) according to any of the preceding claims, **characterised in that** the first mounting point (16) is hinged to a first drive crank (17) and the second mounting point (18) is hinged to a second drive crank (19), for moving the carrier (14) with the machining means (12).

5. Apparatus (1) for machining workpieces (2) according to any of the preceding claims, **characterised in that** the curved paths (K1, K2) are circular paths, ellipsoidal paths or parabolic paths, wherein the first curved path (K1) and the second curved path (K2) preferably have the same geometry and/or are plane-parallel to each other.

6. Apparatus (1) for machining workpieces (2) according to any of the preceding claims, **characterised in that** the machining means (12) is mounted on the carrier (14) between the first mounting point (16) and the second mounting point (18).

7. Apparatus (1) for machining workpieces (2) according to any of the preceding claims, **characterised in that** the drive cranks (17, 19) are mechanically or electromechanically coupled to the conveying device (4) without interposition of the workpiece (2).

8. Method for machining workpieces (2) using an apparatus (1) according to any of the preceding claims, having the steps of:
a) conveying the workpiece (2) by means of the conveying device (4);
b) machining the first and/or second workpiece surfaces (6, 7) which define the workpiece (2) laterally in the direction of conveying (F), by means of the machining means (12) of the machining device (10) at the same time as conveying,
wherein the control device (30) controls the apparatus (1) in such a way that the carrier (14) on which the machining means (12) is mounted is moved with its first mounting point (16) along the first curved path (K1) and with its second mounting point (18) along the second curved path (K2), and wherein, at least during the machining operation, the machining device (10) has substantially the same speed of movement in the direction of conveying (F) as the conveying device (4).

9. Method according to claim 8, **characterised in that**, before and/or during the step of machining, a step c) of detecting the position of at least one workpiece (2) being conveyed on the conveying device (4) is performed, on the basis of which the movement of the first mounting point (16) along the first curved path (K1) and/or of the second mounting point (18) along the second curved path (K2) is controlled.

10. Method according to claim 8 or 9, **characterised in that** the spatial orientation of the carrier (14) relative to the direction of conveying (F) remains substantially unchanged at least during machining.

11. Method according to any of claims 8 to 10, **characterised in that**, before and/or during the step of machining, the first drive crank (17) and the second drive crank (19) are coupled to the conveying device (4) in such a way that the position and/or speed of the conveying device (4) is detected and used to control a rotational position and/or speed of rotation of the drive cranks (17, 19).

## Revendications

1. Dispositif (1) servant à usiner des pièces (2), qui sont constituées de manière préférée, au moins par segments, de bois, de matériaux dérivés du bois, de plastique ou similaires, comprenant :
- un système de transport (4) servant à transporter les pièces (2) dans une direction de transport (F) ;
- un système d'usinage (10) servant à usiner et/ou à traiter une première et/ou une deuxième surface de pièce (6, 7), en particulier une surface étroite de pièce, qui délimite la pièce (2) latéralement dans la direction de transport (F),
le système d'usinage (10) présentant un moyen d'usinage (12), qui est installé au niveau d'un support (14), qui est guidé au niveau d'un premier point de logement (16) le long d'une première trajectoire courbe (K1) et au niveau d'un deuxième point de logement (18) le long d'une deuxième trajectoire courbe (K2),
le dispositif présentant en outre un système de commande (30), qui est mis au point afin de commander le déplacement du support (14) le long de la première et de la deuxième trajectoire courbe (K1, K2) en fonction du déplacement de transport des pièces (2) le long du système de transport (4),
le système de commande (30) étant relié, par l'intermédiaire d'une liaison maître, au système de transport (4) et, par l'intermédiaire d'une liaison d'esclave, à un système d'entraînement servant à produire le déplacement du support (14) le long de la première et de la deuxième trajectoire courbe (K1, K2),
et le déplacement du moyen d'usinage (12) étant synchronisé avec le déplacement en translation du système de transport (4), et ce de telle manière que le système d'usinage (10) a au moins pendant l'opération d'usinage sensiblement la même vitesse de déplacement dans la direction de transport (F) que le système de transport (4),
**caractérisé en ce**
**que** le système de transport présente au moins un moyen de référence (22) déplacé conjointement, en particulier au moins une butée, pour une pièce.

2. Dispositif (1) servant à usiner des pièces (2) selon la revendication 1,
**caractérisé en ce**
**qu'**il présente un système de mesure (20) servant à détecter la position de transport des pièces (2) le long du système de transport (4).

3. Dispositif (1) servant à usiner des pièces (2) selon l'une quelconque des revendications précédentes,
**caractérisé en ce**
**que** le déplacement du moyen d'usinage (12) est synchronisé avec le déplacement en translation du système de transport (4), sans couplage mécanique entre la pièce (2) et le moyen d'usinage (12).

4. Dispositif (1) servant à usiner des pièces (2) selon l'une quelconque des revendications précédentes,
**caractérisé en ce**
**que**, pour déplacer le support (14) avec le moyen d'usinage (12), le premier point de logement (16) est articulé au niveau d'une première manivelle d'entraînement (17) et le deuxième point de logement (18) est articulé au niveau d'une deuxième manivelle d'entraînement (19).

5. Dispositif (1) servant à usiner des pièces (2) selon l'une quelconque des revendications précédentes,
**caractérisé en ce**
**que** les trajectoires courbes (K1, K2) sont des trajectoires circulaires, des trajectoires elliptiques ou des trajectoires paraboliques, la première trajectoire courbe (K1) et la deuxième trajectoire courbe (K2) présentant de manière préférée la même géométrie et/ou étant parallèles l'une à l'autre dans le plan.

6. Dispositif (1) servant à usiner des pièces (2) selon l'une quelconque des revendications précédentes,
**caractérisé en ce**
**que** le moyen d'usinage (12) est installé au niveau du support (14) entre le premier point de logement (16) et le deuxième point de logement (18).

7. Dispositif (1) servant à usiner des pièces (2) selon l'une quelconque des revendications précédentes,
**caractérisé en ce**
**que** les manivelles d'entraînement (17, 19) sont couplées de manière mécanique ou électromécanique au système de transport (4) sans intercaler la pièce (2).

8. Procédé servant à usiner des pièces (2) en utilisant un dispositif (1) selon l'une quelconque des revendications précédentes, comprenant les étapes suivantes consistant à :
a) transporter la pièce (2) au moyen du système de transport (4) ;
b) usiner la première et/ou la deuxième surface de pièce (6, 7), qui délimitent la pièce (2) latéralement dans la direction de transport (F), au moyen du moyen d'usinage (12) du système d'usinage (10) simultanément au transport,
le système de commande (30) commandant le dispositif (1) de telle manière que le support (14), au niveau duquel est installé le moyen d'usinage (12), est déplacé avec son premier point de logement (16) le long de la première trajectoire courbe (K1) et avec son deuxième point de logement (18) le long de la deuxième trajectoire courbe (K2), et le système d'usinage (10) ayant au moins pendant l'opération d'usinage sensiblement la même vitesse de déplacement dans la direction de transport (F) que le système de transport (4).

9. Procédé selon la revendication 8,
**caractérisé en ce**
**qu'**avant et/ou pendant l'étape de procédé de l'usinage, une étape de procédé c) d'une détection de la position au moins d'une pièce (2) transportée sur le système de transport (4) est effectuée, détection sur la base de laquelle le déplacement du premier point de logement (16) le long de la première trajectoire courbe (K1) et/ou du deuxième point de logement (18) le long de la deuxième trajectoire courbe (K2) est commandé.

10. Procédé selon la revendication 8 ou 9,
**caractérisé en ce**
**que** l'orientation spatiale du support (14) par rapport à la direction de transport (F) reste sensiblement inchangée au moins pendant l'usinage.

11. Procédé selon l'une quelconque des revendications 8 à 10,
**caractérisé en ce**
**qu'**avant et/ou pendant l'étape de travail de l'usinage, la première manivelle d'entraînement (17) et la deuxième manivelle d'entraînement (19) sont couplées de telle manière au système de transport (4) que la position et/ou la vitesse du système de transport (4) sont détectées et sont utilisées afin de commander une position de rotation et/ou une vitesse de rotation des manivelles d'entraînement (17,19).
